(19)

Europäisches
Patentamt
European
Patent Office
Office européen
des brevets

(11) **EP 2 789 873 A1**

(12) **EUROPEAN PATENT APPLICATION**
published in accordance with Art. 153(4) EPC

(43) Date of publication:
**15.10.2014 Bulletin 2014/42**

(21) Application number: **12854230.5**

(22) Date of filing: **27.11.2012**

(51) Int Cl.:
*F16F 7/12* (2006.01)      *C08J 5/04* (2006.01)
*F16F 7/00* (2006.01)

(86) International application number:
**PCT/JP2012/080633**

(87) International publication number:
**WO 2013/080975 (06.06.2013 Gazette 2013/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.11.2011   JP 2011259046
07.12.2011   JP 2011268176**

(71) Applicant: **TEIJIN LIMITED
Chuo-ku
Osaka-shi
Osaka 541-0054 (JP)**

(72) Inventors:
• **TESHIMA Masatomo
Gotemba-shi
Shizuoka 412-0048 (JP)**
• **ARAI Tsukasa
Gotemba-shi
Shizuoka 412-0048 (JP)**

(74) Representative: **Carpmaels & Ransford LLP
One Southampton Row
London WC1B 5HA (GB)**

(54) **IMPACT RESISTANT MEMBER**

(57)    A shock resistant member which is lightweight and has a high degree of freedom in shape, and excellent shock resistance, is provided.

A shock resistant member including an open cross-section part and a rib part present in an inside of the open cross-section part, in which at least one of the open cross-section part and the rib part includes a carbon-fiber-reinforced composite material including a thermoplastic resin, and the other may include a thermoplastic resin, and in which an amount of the thermoplastic resin present in the shock resistant member is 30 to 500 parts by mass based on 100 parts by mass of carbon fibers, and an average fiber length of the carbon fibers is 3 to 100 mm.

FIG. 1

EP 2 789 873 A1

## Description

Technical Field

The present invention relates to a shock resistant member including an open cross-section part and a rib part in the inner side of the open cross-section part, in which at least one of the open cross-section part and the rib part includes a carbon-fiber-reinforced composite material including a thermoplastic resin, and the other may include a thermoplastic resin. Further, the present invention relates to a shock resistant member which is preferably used for a moving vehicle such as an airplane, an automobile, a train and a two-wheeled vehicle.

Background Art

A part to absorb shock during collision and a part to withstand the shock and protect passenger spaces are required for a moving vehicle. Recently, from the viewpoint of enhancing the fuel efficiency or the driving performance of a moving vehicle, requirements for reduction in weight have been increased, and and lightweight and high rigidity have been required for cases or members used for the moving vehicle. Meanwhile, a gradually high level tends to be required for safety during collision, and compatibility of lightweight and protection of passenger spaces is becoming more and more important.

From this background, a plurality of passenger space protection structures, in which a resin or composite material is used, is disclosed. For example, Patent Document 1 discloses a structure in which a plurality of skeleton members made of a long fiber reinforced composite material is combined. Accordingly, a load inputted from one end may be transferred to the other end, but the degree of freedom in shape is so small that an input load direction capable of responding thereto is also limited to the fiber direction. In addition, since members in which long fibers oriented within a certain range need to be combined, molding becomes complicated, and the manufacturing tact and manufacturing cost were high.

On one hand, Patent Document 2 discloses a structure in which a synthetic resin is used. For the structure, the degree of freedom in shape is high, and rigidity may be increased by providing a rib, but the shock resistance is low and the mass of the structure against a large shock is heavy.

Related Art

Patent Documents

    Patent Document 1: Japanese Patent Application Laid-Open No. 2008-68720
    Patent Document 2: Japanese Patent Application Laid-Open No. H6-305378

Disclosure of Invention

Problems to Be Solved by Invention

An object of the present invention is to provide a shock resistant member which is lightweight and has a high degree of freedom in shape and excellent shock resistance, and furthermore excellent shock resistance to a load inputted from each of the longitudinal direction, the width direction, and the height direction, and a manufacturing method thereof.

Means for Solving the Problems

As a result of intensive studies for achieving the aforementioned object, the present inventors have reached the present invention. That is, the present invention relates to a shock resistant member including an open cross-section part and a rib part in an inner side of the open cross-section part, in which at least one of the open cross-section part and the rib part includes a carbon-fiber-reinforced composite material including a thermoplastic resin, and the other may include a thermoplastic resin, and in which an amount of the thermoplastic resin present in the shock resistant member is 30 to 1,000 parts by mass based on 100 parts by mass of carbon fibers, and an average fiber length of the carbon fibers is 3 to 100 mm.

Effects of Invention

According to the present invention, it is possible to manufacture a shock resistant member which is lightweight and has a high degree of freedom in shape and excellent shock resistance. In addition, it is possible to provide a manufacturing method, by which a shock resistant member, which is lightweight and has a high degree of freedom in shape and excellent shock resistance may be manufactured with high efficiency.

Brief Description of Drawings

FIG. 1 is a perspective view of a first embodiment (the ratio of the total area of a rib part to the total area of a plate body of an open cross-section part is 18%) of the present invention.

FIG. 2 is a perspective view of a second embodiment (the ratio of the total area of a rib part to the total area of a plate body of an open cross-section part is 53%) of the present invention.

FIG. 3 is a perspective view of a third embodiment (the ratio of the total area of a rib part to the total area of a plate body of an open cross-section part is 48%) of the present invention.

FIG. 4 is a perspective view of a fourth embodiment (the ratio of the total area of a rib part to the total area of a plate body of an open cross-section part is 44%) of the present invention.

FIG. 5 is a perspective view of a fifth embodiment (the ratio of the total area of a rib part to the total area of a plate body of an open cross-section part is 65%) of the present invention.

FIG. 6 is a perspective view of a sixth embodiment (the ratio of the total area of a rib part to the total area of a plate body of an open cross-section part is 25%) of the present invention.

FIG. 7 is a perspective view of a seventh embodiment (the ratio of the total area of a rib part to the total area of a plate body of an open cross-section part is 42%) of the present invention.

FIG. 8 is a perspective view of an eighth embodiment (the ratio of the total area of a rib part to the total area of a plate body of an open cross-section part is 20%) of the present invention.

FIG. 9 is a perspective view of a ninth embodiment (the ratio of the total area of a rib part to the total area of a plate body of an open cross-section part is 60%) of the present invention.

FIG. 10 is a perspective view of a tenth embodiment (the ratio of the total area of a rib part to the total area of a plate body of an open cross-section part is 34%) of the present invention.

FIG. 11 is a perspective view in a comparison form.

Embodiments for Carrying Out the Invention

The present invention provides a shock resistant member including an open cross-section part and a rib part in the inner side of the open cross-section part, in which at least one of the open cross-section part and the rib part includes a carbon-fiber-reinforced composite material including a thermoplastic resin, and the other may include a thermoplastic resin. As the carbon-fiber-reinforced composite material, preferred is an isotropic carbon-fiber-reinforced composite material in which discontinuous carbon fibers are randomly oriented and present in the plane in the thermoplastic resin. Hereinafter, embodiments of a shock resistant member of the present invention will be described, but the present invention is not limited thereto.

[Shock Resistant Member]

A shock resistant member of the present invention is a shock resistant member including an open cross-section part and a rib part in the inner side of the open cross-section part, in which at least one of the open cross-section part and the rib part inclueds a carbon-fiber-reinforced composite material including a thermoplastic resin, and the other may include a thermoplastic resin, and in which an amount of the thermoplastic resin present in the shock resistant member is 30 to 1,000 parts by mass based on 100 parts by mass of carbon fibers, and an average fiber length of the carbon fibers is 3 to 100 mm.

In the shock resistant member of the present invention, when one of the open cross-section part and the rib part includes a carbon-fiber-reinforced composite material and the other includes a thermoplastic resin, the thermoplastic resin included in the carbon-fiber-reinforced composite material and the thermoplastic resin included in the other side may be the same kind or different kinds.

In the shock resistant member of the present invention, it is preferred that both the open cross-section part and the rib part include a carbon-fiber-reinforced composite material, and the carbon-fiber-reinforced composite materials constituting the open cross-section part and the rib part may be the same kind or different kinds.

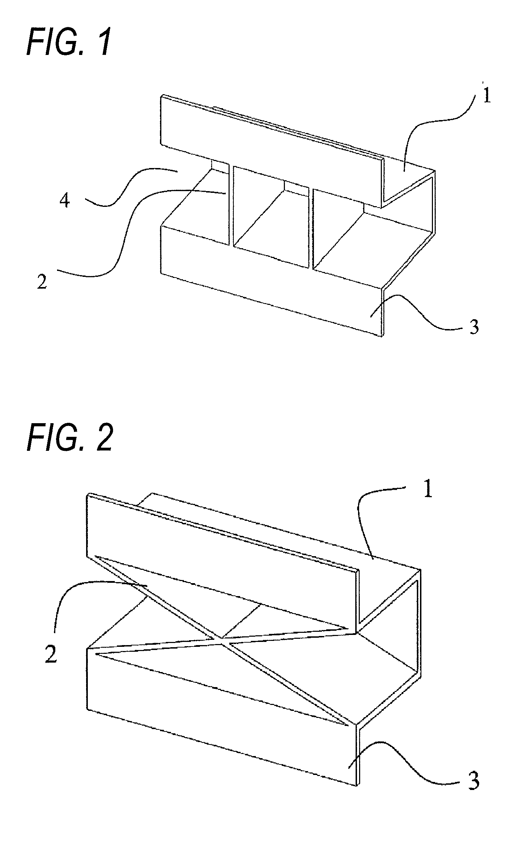

FIG. 1 illustrates an example of embodiments of the present invention. As illustrated in FIG. 1, the open cross-section part and the rib part are represented as 1 and 2, respectively.

The open cross-section part is a structure in which the cross section thereof is configured to be an open cross-section shape such as a hat shape and a U-shape, and which has a pair of facing surfaces (opposite surfaces) in the inner side thereof, and a bottom surface connecting the edges of the pair of opposite surfaces. The rib part refers to a site which is elongated to the inner side of the open cross-section part. The inner side of the open cross-section part refers to a part to be hollow when the open cross-section part is tentatively closed.

It is preferred that the rib part is provided to be elongated in a direction perpendicular to the bottom surface which is in the inner side of the open cross-section part. Further, the elongation in a direction perpendicular to the bottom surface means that the angle may not be strictly right-angled with respect to the bottom surface, and it is possible to take any angle or an angle for securing a draft angle of a mold to such an extent that the intention of the present invention is not impaired. In this case, the angle between the open cross-section part and the rib part is preferably 30 to 90 degrees, and more preferably 40 to 90 degrees. It is also possible to add any chamfering or curvature between the open cross-section part and the rib part to such an extent that the intention of the present invention is not impaired. The dimension of the chamfering or curvature is not limited, but it is preferred that the dimension is C 0.2 to 10 mm for the chamfering and the dimension is R 0.2 to 10 mm for the curvature.

The number of ribs is not limited, and may be one or plural numbers. The kind of shape of the rib part is not particularly limited, and may be one or combination of plural kinds thereof.

The rib part and the open cross-section part may be integrally molded with each other, and may be molded as separate members, such as, for example, the use of a carbon fiber composite material in the rib part and the use of a thermoplastic resin in the open cross-section part, and then joined with each other, but in order to enhance the shock resistant performance, it is preferred that the rib part and the open cross-section part are integrally molded using a carbon fiber composite material. The shock resistant performance as referred to herein is not limited to the shock load direction.

[Open Cross-Section Part]

In the shock resistant member of the present invention, the open cross-section part is a structure in which an open cross-section is formed by a plurality of substantially planar plate bodies, and refers to a site which underlies the rib part. FIG. 1 illustrates an example of embodiments of the present invention, but the open cross-section part and the inner side of the open cross-section part are represented as 1 and 4, respectively. Further, the aforementioned plate body may be a so-called curved plate without being limited to a flat plate.

Each surface of the open cross-section part needs not be completely planar, and may have a partial unevenness or bead. The height or width of the unevenness or the bead is not particularly limited, but it is preferred that the height is 0.5 to 2 times larger than the plate thickness of the underlying open cross-section part. The open cross-section part may have a through-hole for ventilation, bolt fastening, and the wiring. In this case, holes may be opened by using a shear and the like in the mold simultaneously with the molding of the shock resistant member (shaped product), and holes may also be opened with drilling, punching, cutting processes and the like as a post process. The plate thickness of the open cross-section part is not particularly limited, but is preferably 0.2 to 5 mm, and more preferably 1 to 3 mm. The plate thickness of the open cross-section part needs not be uniform, and may also be locally increased or decreased. In this case, the width of increase or decrease in the plate thickness is not particularly limited, but is preferably 30 to 300%, and more preferably 50 to 200% the plate thickness of the underlying open cross-section part. It is also possible to vary the plate thickness stepwise, and also to continuously vary the plate thickness by allowing the plate thickness to have a taper or a curvature, but it is preferred that the plate thickness is continuously varied from the viewpoint of avoiding stress concentration.

[Rib Part]

In the shock resistant member of the present invention, the rib part refers to a site which is elongated in the inner side of the above-described open cross-section part, and is preferably a site which is elongated in a direction perpendicular to the inner side of the open cross-section part.

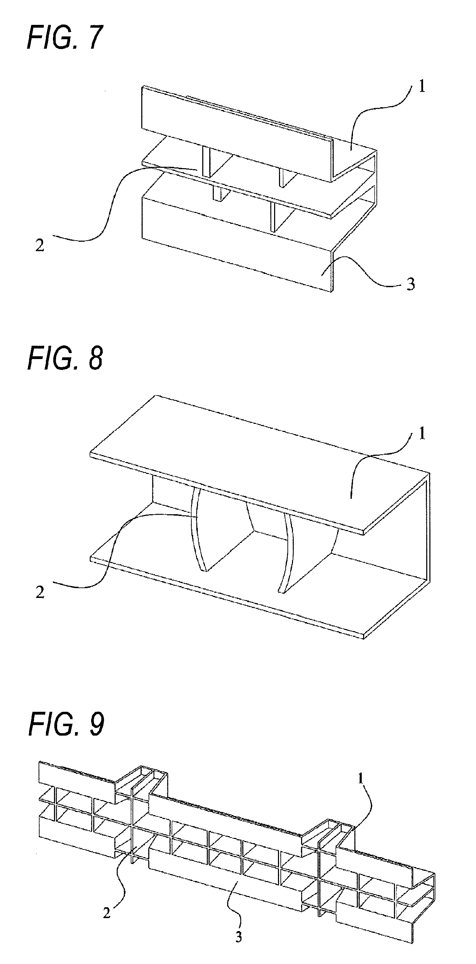

In addition, it is preferred that the shock resistant member of the present invention has a structure in which the rib part thereof connects facing surfaces (opposite surfaces) of the above-described open cross-section part. A shock resistant member having excellent shock resistance may be made by providing the rib part so as to connect the opposite surfaces of the open cross-section part. Further, the aforementioned structure in which the rib part thereof connects the opposite surfaces of the open cross-section part may be not only a structure in which the opposite surfaces are directly connected by the same rib part, but also a structure in which the opposite surfaces are indirectly connected at the rib part by connecting a rib part provided in a wall-like form between the opposite surfaces with each of the opposite surface rib parts, for example, as illustrated in FIG. 7.

As the shock resistant member of the present invention, as illustrated in FIG. 1 and the like, a shock resistant member having two or more rib parts is preferred because the shock resistance is enhanced.

For the shock resistant member of the present invention, it is preferred that the height of the rib part is at a ratio from 5% to 100% of the height of an opening from the bottom surface of the open cross-section part. For example, in the shock resistant member illustrated in FIG. 8, a ratio of the height of the rib part to the height of the opening of the open cross-section part is 70%.

The aforementioned ratio of the height of the rib part may be a ratio of the height of the rib part when the lowest point is 100% in the case where the height of the opening is changed, and may be a ratio obtained by using the height of the highest rib part in a shock resistant member having a plurality of rib parts which are different in height. Further, when the plate body of the bottom surface of the open cross-section part of the shock resistant member is a curved plate having an arc-shaped cross section and the like, the ratio of the height of the rib part may be calculated from the height of the rib part or the opening based on the lowest part.

The shock resistant member of the present invention is preferably a shock resistant member having a rib part which is vertical (may be approximately vertical) to the plate body of the open cross-section part. As described above, a rib part vertical to the plate body which is at the bottom surface in the inner side of the open cross-section part is preferred, a rib part is also preferably vertical to the plate body of the opposite surfaces, and a rib part vertical to any one of the plate body of the bottom surface and the plate body of the opposite surfaces may also be preferred as the shock resistant member and the like illustrated in FIG. 2.

The shock resistant member of the present invention is preferably a shock resistant member having a rib part which is symmetrical to the surface orthogonal to the open cross-section part. Examples of the surface orthogonal to the open cross-section part include a virtual surface which is orthogonal to the plate body of the bottom surface and bisects two facing surfaces (two opposite surfaces) at the middle thereof, and the like in the shock resistant member of FIG. 1.

The shock resistant member of the present invention is preferably a shock resistant member in which the rib is formed such that the ratio of the total area of the rib part is 1% or more based on the total area of the plate body of the open cross-section part. When the total area of the rib part is 1% or more, a more useful shock resistant member is produced, which is preferred. The shock resistant member of the present invention may be a shock resistant member in which the ratio of the total area of the rib part is 100%, that is, the total area of the open cross-section part plate body is equal to that of the rib part, and may be a shock resistant member in which the ratio of the total area of the rib part exceeds 100% by extremely increasing the number of ribs and the like, but examples of a preferred range thereof include 10% to 80%.

In the example of embodiments of the present invention illustrated in FIG. 1, the rib part is represented as 2. The height of the rib part is not particularly limited, but is preferably 1 to 300 mm, and more preferably 5 to 100 mm. The height of the rib part needs not be uniform, and may also be locally increased or decreased. The width of increase or decrease in height of the rib part is not particularly limited, and is preferably 10 to 90%, and more preferably 20 to 80% of the maximum height. The plate thickness of the rib part is not particularly limited, and may be the same as or different from that of the open cross-section part.

The plate thickness of the rib part is preferably 0.2 to 100 mm, and more preferably 1 to 50 mm. The plate thickness of the rib part needs not be uniform, and may also be locally increased or decreased. In this case, the width of increase or decrease is not particularly limited, but is preferably 20 to 500%, and more preferably 50 to 200% of the plate thickness of the underlying rib part. It is also possible to vary the plate thickness stepwise, and also to continuously vary the plate thickness by allowing the plate thickness to have a taper or a curvature, but it is preferred that the plate thickness is continuously varied from the viewpoint of avoiding stress concentration. In addition, it is preferred that an angle for securing the draft angle of the mold is provided on the rib part to such an extent that the intention of the present invention is not impaired. The draft angle of the mold is preferably 0 to 45 degrees, and more preferably 0 to 10 degrees.

[Panel Part]

The shock resistant member of the present invention is preferably a shock resistant member further having a panel part which is continuous to the end of the open cross-section part.

In the shock resistant member of the present invention, the panel part refers to a site which is substantially planar and continuous to the end of the open cross-section part. In the example of embodiments of the present invention illustrated in FIG. 1, the panel part is represented as 3. The panel part needs not be completely planar, and may have a partial unevenness or bead. The height or width of the unevenness or the bead is not particularly limited, but it is preferred that the height is 0.5 to 2 times the plate thickness of the underlying panel part. The panel part may have a through-hole for ventilation, bolt fastening, and wiring. In this case, holes may be opened by using a shear and the like in the mold simultaneously with the molding of the shock resistant member (shaped product), and holes may also be opened with drilling, punching, cutting processes and the like as a post process. The plate thickness of the panel part is not particularly limited, but is preferably 0.2 to 5 mm, and more preferably 1 to 3 mm. The plate thickness of the panel part needs not be uniform, and may also be locally increased or decreased. In this case, the width of increase or decrease in the plate thickness is not particularly limited, but is preferably 30 to 300%, and more preferably 50 to 200% the plate thickness of the underlying panel part. It is also possible to vary the plate thickness stepwise, and also to continuously vary the plate thickness by allowing the plate thickness to have a taper or a curvature, but it is preferred that the plate thickness is continuously varied from the viewpoint of avoiding stress concentration. The panel part and the open cross-section part may be integrally molded, and the parts may be molded as separate members and then joined together, but it is preferred that the parts are integrally molded in order to enhance the shock resistant performance. Furthermore, a shock resistant member in which the open cross-section part, the rib part, and the panel part are integrally molded is preferred.

[Thermoplastic Resin]

In the shock resistant member of the present invention, the amount of a thermoplastic resin present is 30 to 1,000 parts by mass based on 100 parts by mass of carbon fibers. The amount of the thermoplastic resin present is more preferably 30 to 500 parts by mass, even more preferably 30 to 200 parts by mass, and particularly preferably 60 to 200 parts by mass based on 100 parts by mass of carbon fibers.

The shock resistant member of the present invention is more preferably a shock resistant member in which all the parts including the open cross-section part, the rib part, and also the panel part are made of a carbon-fiber-reinforced composite material, and also in the carbon-fiber-reinforced composite material, the amount of the thermoplastic resin present is 30 to 1,000 parts by mass based on 100 parts by mass of carbon fibers. The amount of the thermoplastic resin present is even more preferably 30 to 500 parts by mass, further preferably 30 to 200 parts by mass, and particularly preferably 60 to 200 parts by mass based on 100 parts by mass of carbon fibers.

The thermoplastic resin used in the present invention is not particularly limited, but preferred examples thereof include at least one selected from the group consisting of a vinyl chloride resin, a vinylidene chloride resin, a vinyl acetate resin, a polyvinyl alcohol resin, a polystyrene resin, an acrylonitrile-styrene resin (AS resin), an acrylonitrile-butadiene-styrene resin (ABS resin), an acrylic resin, a methacrylic resin, a polyethylene resin, a polypropylene resin, a polyamide resin (for example, a polyamide 6 resin, a polyamide 11 resin, a polyamide 12 resin, a polyamide 46 resin, a polyamide 66 resin and a polyamide 610 resin), a polyacetal resin, a polycarbonate resin, a polyethylene terephthalate resin, a polyethylene naphthalate resin, a polybutylene terephthalate resin, a polyarylate resin, a polyphenylene ether resin, a polyphenylene sulfide resin, a polysulfone resin, polyether sulfone resin, a polyether ether ketone resin, a polylactic resin, and a mixture (resin composition) of two kinds or more selected from those resins. The thermoplastic resin is preferably at least one selected from the group consisting of a polycarbonate resin, a polyester resin, a polycarbonate, an ABS resin, a polyphenylene ether resin, a polyamide resin, and a mixture of two kinds or more selected from those resins, and more preferably a polyamide resin or a polyester resin.

As the aforementioned resin composition, at least one selected from the group consisting of a composition of a polycarbonate resin and a polyester resin, a composition of a polycarbonate and an ABS resin, a composition of a polyphenylene ether resin and a polyamide resin, a composition of a polyamide resin and an ABS resin, and a composition of a polyester resin and a polyamide resin is more preferred.

Furthermore, a functional filler or additive may be contained in the carbon-fiber-reinforced composite material or the thermoplastic resin within the range which does not impair the object of the present invention. Examples thereof include organic/inorganic fillers, a flame retardant, a UV-resistant agent, a pigment, a mold release agent, a softener, a plasticizer, a surfactant and the like, but are not limited thereto.

[Carbon Fibers Included in Shock Resistant Member]

The carbon fibers included in a carbon fiber composite material constituting the shock resistant member of the present invention are discontinuous carbon fibers having an average fiber length from 3 mm to 100 mm. Due to this, the shock resistant member becomes a shock resistant member (shaped product) showing high physical properties not only for static strength and rigidity, but also for impact load or long-term fatigue load. When the average fiber length is less than 3 mm, there is a problem in that physical properties of the shock resistant member deteriorate, and when the average fiber length is longer than 100 mm, there is a problem in that handleability of the carbon fibers becomes poor. The average fiber length of the carbon fibers is preferably 8 mm or more, more preferably 10 mm or more, even more preferably 15 mm or more, and further preferably 20 mm or more. Further, the fiber length of the carbon fibers is preferably 80 mm or less, more preferably 60 mm or less. The average fiber length is particularly preferably 8 mm to 80 mm.

For the shock resistant member of the present invention, it is preferred that the ratio of carbon fiber bundles (A) constituted by the carbon fibers, included in the carbon-fiber-reinforced composite material, of the critical single fiber number or more, defined by the following Equation (1), to the total amount of the carbon fibers is 20 vol% or more and 99 vol% or less.

$$\text{Critical single fiber number} = 600/D \qquad (1)$$

(wherein D is an average fiber diameter ($\mu$m) of single carbon fibers.)

For the shock resistant member of the present invention, it is more preferred that the ratio of carbon fiber bundles (A) constituted by the carbon fibers, included in the carbon-fiber-reinforced composite material, of the critical single fiber number or more, defined by the aforementioned Equation (1), to the total amount of the carbon fibers in the carbon-fiber-reinforced composite material is 20 vol% or more and less than 99 vol%, and the average number (N) of fibers in the carbon fiber bundles (A) satisfies the following Equation (2).

$$0.7 \times 10^4/D^2 < N < 1 \times 10^5/D^2 \qquad (2)$$

(wherein D is an average fiber diameter ($\mu$m) of single carbon fibers.)

When the aforementioned ratio of the carbon fiber bundles (A) to the total amount of carbon fibers is less than 20 vol%, there is an advantage in that a shock resistant member (shaped product) having excellent surface quality may be obtained, but it is difficult to obtain a shock resistant member (shaped product) having excellent mechanical properties. When the ratio of the carbon fiber bundles (A) exceeds 99 vol%, the crossing portion of the fibers becomes locally thick, so that it is difficult to obtain a thin-walled shock resistant member. The ratio of the carbon fiber bundles (A) is preferably 30 vol% or more and less than 90 vol%, more preferably 30 vol% or more and less than 80 vol%.

Further, when another expression is used with respect to the aforementioned carbon fiber bundles (A), in the carbon-fiber-reinforced composite material constituting the shock resistant member of the present invention, 20 vol% or more and 99 vol% or less of carbon fibers become the carbon fiber bundles (A) constituted by the carbon fibers of the critical single fiber number or more, defined by the above Equation (1), and 1 vol% or more and 80% or less of the other carbon fibers become a single fiber state or the fiber bundles constituted by the carbon fibers of less than the aforementioned critical single fiber number, and are dispersed in a thermoplastic resin. Furthermore, in the carbon-fiber-reinforced composite material constituting the shock resistant member of the present invention, when the average number (N) of fibers in the carbon fiber bundles (A) constituted by the carbon fibers of the critical single fiber number or more satisfies the following Equation (2), even in the case of a shock resistant member having a thin-walled portion having a thickness from about 0.2 mm to 1 mm, the surface is particularly smooth, and the thickness is uniform, which is preferred.

$$0.7 \times 10^4/D^2 < N < 1 \times 10^5/D^2 \qquad (2)$$

(wherein D is an average fiber diameter ($\mu$m) of single carbon fibers)

For the average number (N) of fibers in the carbon fiber bundles (A), specifically when the average fiber diameter of carbon fibers is 5 to 7 $\mu$m, the critical single fiber number is 86 to 120, and when the average fiber diameter of carbon fibers is 5 $\mu$m, the average number of fibers in the fiber bundles is in a range more than 280 and less than 4,000, but among them, the number is preferably 600 to 2,500, more preferably 600 to 1,600. When the average fiber diameter of carbon fibers is 7 μm, the average number of fibers in the fiber bundles is in a range more than 142 and less than 2,040, but among them, the number is preferably 300 to 1,600. The number is more preferably 300 to 800.

When the average number (N) of fibers in the carbon fiber bundles (A) is $0.7 \times 10^4/D^2$ or less, it is difficult to obtain a high fiber volume fraction (Vf). Further, when the average number (N) of fibers in the carbon fiber bundles (A) is $1 \times 10^5/D^2$ or more, locally thick portions are produced, which is likely to be responsible for voids. For the average number (N) of fibers in the aforementioned carbon fiber bundles (A), the number satisfying the following Equation (2') is more preferred.

$$0.7 \times 10^4/D^2 < N < 6 \times 10^4/D^2 \qquad (2')$$

(wherein D is an average fiber diameter (μm) of signle carbon fibers)

It is preferred that the shock resistant member (shaped product) of the present invention has a ratio (hereinafter sometimes abbreviated to Eδ) of 1.0 to 1.3, obtained by dividing a higher value by a smaller value of tensile moduli in any in-plane direction in a bottom surface and in a direction perpendicular to the direction in the same plane (hereinafter, sometimes referred to as a 0 degree direction and a 90 degree direction, respectively). The Eδ is an isotropy index of the material, and when the Eδ is less than 2, the shock resistant member is evaluated as being isotropic, and when the Eδ is 1.3 or less, the shock resistant member is evaluated as being particularly excellent in isotropy. Furthermore, it is also preferred to provide, in one or more sites selected from the open cross-section part, the rib part and the panel part, a one-directional material layer in which continuous fibers are arranged evenly in one direction in the thermoplastic resin.

For the shock resistant material of the present invention, the ratio of the amount of the thermoplastic resin present, which is obtained by the following Equation (i) based on the amount of the thermoplastic resin present in the open cross-section part (parts by mass per 100 parts by mass of carbon fibers) and the amount of the thermoplastic resin present in the rib part (parts by mass per 100 parts by mass of carbon fibers), is preferably -60% to +45%, more preferably -40% to +30%, even more preferably -20% to +20%, further preferably -10% to +10%, and particularly preferably 0%, that is, it is particularly preferred that the amounts of the thermoplastic resin present in the open cross-section surface part and the rib part are the same as each other.

$$\text{Ratio (\%) of the amount of the thermoplastic resin present} = 100 \times ((\text{Amount of the thermoplastic resin present in the rib part}) - (\text{the amount of the thermoplastic resin present in the open cross-section part})) / (\text{the amount of the thermoplastic resin present in the open cross-section part}) \qquad (i)$$

For the shock resistant member of the present invention, it is preferred that the aforementioned ratio of the thermoplastic resin present is -60% to 45%, and further, for the tensile moduli in any direction within a bottom surface of the open cross-section part and in a direction orthogonal to the direction in the same plane, the ratio obtained by dividing a larger value by a smaller value is 1.0 to 1.3.

For the shock resistant member of the present invention, it is more preferred that the amount of the thermoplastic resin present is the same in the open cross-section part and the rib part in the shock resistant member, and for the tensile moduli in any direction within a bottom surface of the open cross-section part and in a direction orthogonal to the direction within the same plane, the ratio obtained by dividing a larger value by a smaller value is 1.0 to 1.3.

For the shock resistant member of the present invention, the shock resistant performance of the shock resistant member is preferably $4 \times 10^{11}$ or more ($N^3/g$), more preferably $7 \times 10^{11}$ or more ($N^3/g$), and even more preferably $1 \times 10^{12}$ or more ($N^3/g$). The shock resistant performance may be appropriately adjusted by a site in which the shock resistant member is used, but a sufficient performance may be exhibited as a shock resistant member as long as the shock resistant performance is $4 \times 10^{11}$ or more ($N^3/g$). The upper limit of the shock resistant performance is not particularly limited, but a value of $5 \times 10^{13}$ or less ($N^3/g$) is sufficient for many uses.

The shock resistant performance may be evaluated by measuring the withstanding load when the shock resistant member is compressed at high speed. That is, it is possible to make an evaluation in which performance on the input other than one direction is also added by dividing the product of the withstanding loads in the longitudinal direction, the width direction and the height direction of the shock resistant member by the mass of the shock resistant member.

The withstanding load may be measured using, for example, a weight-drop tester.

<Method for Manufacturing Shock Resistant Member>

A preferred method for manufacturing a shock resistant member according to the present invention is a manufacturing method which includes press-molidng a random mat consititeud by carbon fibers having an average length of fibers from 3 mm to 100 mm and a thermoplastic resin, in which the fibers have a fiber areal weight from 25 $g/m^2$ to 3,000 $g/m^2$, and the ratio of carbon fiber bundles (A) constituted by the carbon fibers of the critical number of single or more, defined by the following Equation (1), to the total amount of the carbon fibers in the random mat is 20 vol% or more and 99 vol% or less.

$$\text{Critical single fiber number} = 600/D \qquad (1)$$

(wherein D is an average fiber diameter ($\mu$m) of single carbon fibers.)

A more preferred method for manufacturing a shock resistant member according to the present invention is a manufacturing method which includes press-molding a random mat constituted by carbon fibers having a fiber length from 3 mm to 100 mm and a thermoplastic resin, in which the carbon fibers have a fiber areal weight from 25 $g/m^2$ to 3,000 $g/m^2$, the ratio of carbon fiber bundles (A) constituted by the carbon fibers of the critical single fiber number or more, defined by the aforementioned Equation (1), to the total amount of the carbon fibers in the random mat is 20 vol% or more and less than 99 vol%, and the average number (N) of fibers in the carbon fiber bundles (A) satisfies the aforementioned Equation (2).

In terms of a manufacturing efficiency, it is preferred that a shock resistant member having an open cross-section part and a rib part is obtained by performing press-molding one time, but the shock resistant member may be manufactured by separately molding the open cross-section part and the rib part, and then joining these parts, and may be manufactured by obtaining one of the open cross-section part and the rib part by allowing the random mat to be press-molded as described above, obtaining the other by another method, and joining these parts.

The present invention includes the preferred method for manufacturing the shock resistant member. The present invention may provide a shock resistant member, in which relatively long carbon fibers having an average fiber length from 3 mm to 100 mm is filled in such a high filling ration that the amount of the thermoplastic resin present is 30 to 1000 parts by mass based on 100 parts by mass of the carbon fibers, and in which the degree of freedom in shape is high, shock resistance is excellent, and furthermore, shock resistance to the load inputted from each of the longitudinal direction, the width direction and the height direction is excellent.

A hot press may also be applied, in which a mold is heated to a softening temperature or more of a thermoplastic resin to perform press-molding, and then the mold and a product are cooled to a temperature less than the softening temperature of the thermoplastic resin, and a cold press may also be applied, in which a prepreg obtained using a random mat is heated to a softening temperature or more of a thermoplastic resin and press-molding is performed with a mold having a temperature which is less than the softening temperature of the thermoplastic resin. In the method of the present invention, a shock resistant member having the complex shape may be obtained with a molding one time, and it is possible to obtain a shock resistant member by integrally molding the open cross-section part, the rib part, and the panel part. Further, the softening temperature of a thermoplastic resin in the present application refers to a melting temperature when the thermoplastic resin is crystalline, and to a glass transition temperature when the thermoplastic resin is amorphous.

<Random Mat>

The random mat used in the method for manufacturing a shock resistant member according to the present invention is constituted by carbon fibers having an average fiber length from 3 mm to 100 mm and a thermoplastic resin in which the carbon fibers have a fiber areal weight from 25 $g/m^2$ to 3,000 $g/m^2$, the ratio of carbon fiber bundles (A) constituted by the carbon fibers of the critical single fiber number or more, defined by the aforementioned Equation (1), to the total amount of the fibers in the random mat is 20 vol% or more and 99 vol% or less, and the average number (N) of fibers in the carbon fiber bundles (A) satisfies the aforementioned Equation (2).

The random mat in the present invention refers to a random mat in which a thermoplastic resin is attached to a mat-like material in which carbon fibers are entangled with each other.

Details on the carbon fibers, the thermoplastic resin and the carbon fiber bundles (A) in the random mat are the same as those described above on the carbon-fiber-reinforced composite material constituting the shock resistant member, but are supplemented as follows.

In a plane of the random mat, carbon fibers are not aligned in a specific direction, but are dispersed and oriented in random directions. It is preferred that the random mat used in the manufacturing method of the present invention is an isotropic material. When a shock resistant member is obtained from the random mat, the isotropy of carbon fibers in the random mat is also maintained in the shock resistant member. It is possible to quantitatively evaluate the isotropy of a random mat and a shock resistant member obtained from the same by obtaining the shock resistant member from the random mat, and obtaining a ratio ($E\delta$) of a larger value to a smaller value of the tensile moduli in the two directions orthogonal to each other for the shock resistant member. A shock resistant member having an $E\delta$ less than 2 is evaluated as being isotropic, and a shock resistant member having an $E\delta$ of 1.3 or less is evaluated as being particularly excellent in isotropy.

First, the random mat used in the manufacturing method of the present invention is advantageous in that a shock resistant member having excellent surface quality may be obtained when the ratio of the carbon fiber bundles (A) to the total amount of fibers in the random mat is less than 20 vol%, but it is difficult to obtain a shock resistant member having excellent mechanical properties. When the ratio of the carbon fiber bundles (A) exceeds 99 vol%, the crossing portion of the fibers becomes locally thick, so that it is difficult to obtain a thin-walled shock resistant member. The ratio of the carbon fiber bundles (A) in the random mat is preferably 30 vol% or more and less than 90 vol%, and more preferably 30 vol% or more and less than 80 vol%.

As described above on the carbon fiber composite material constituting the shock resistant member of the present invention, the random mat is also preferred as long as the average number (N) of fibers in the carbon fiber bundles (A) satisfies the aforementioned Equation (2). When a random mat having an average number (N) of fibers of $0.7 \times 10^4/D^2$ or less is used, it is difficult to obtain a shock resistant member having a high carbon fiber volume fraction (Vf). In addition, when a random mat having an average number (N) of fibers of $1 \times 10^5/D^2$ or more is used, locally thick portions are produced, which is likely to be responsible for voids. For the average number (N) of fibers in the aforementioned carbon fiber bundles (A), the number satisfying the following Equation (2') is more preferred.

$$0.7 \times 10^4/D^2 < N < 6 \times 10^4/D^2 \qquad (2')$$

(wherein D is an average fiber diameter ($\mu$m) of single carbon fibers.)

Furthermore, when impregnation to molding are performed using the random mat used in the manufacturing method of the present invention, and a thin-walled shock resistant member of 1 mm or less is intended to be obtained, the use of fibers simply separated results in considerable unevenness in fiber density and a failure to obtain good physical properties. Further, when all fibers are opened, it is easy to obtain a thinner shock resistant member, but the entanglement of fibers is increased, and a shock resistant member having a high fiber volume fraction may not be obtained. It is possible to implement a thin-walled shock resistant member having high development rate of physical property by allowing the carbon fiber bundles (A) constituted by the carbon fibers of the critical single fiber number or more, defined by the aforementioned Equation (1), and carbon fibers (B) in a state of single fibers or constituted by the carbon fibers of less than the critical single fiber number to be simultaneously present in the shock resistant member. The manufacturing method of the present invention may provide shock resistant members having various thicknesses, but is particularly suitable for obtaining a thin-walled shock resistant member having a thickness from about 0.2 mm to 1 mm.

The thickness of the random mat used in the manufacturing method of the present invention is not particularly limited, but a random mat having a thickness from 1 mm to 150 mm may be obtained. The thickness from 2 mm to 100 mm is preferred in that effect of the present invention to obtain a shock resistant member which is thinner-walled than the random mat of the present invention is exhibited. Further, the random mat may also be used in the next step after the volume of the random mat is reduced to a thickness easy to use by using a suitable compression or decompression device.

When the amount of carbon fibers and a thermoplastic resin present in the random mat used in the manufacturing method of the present invention is expressed in terms of mass, the amount is preferably 30 to 1,000 parts by mass, more preferably 30 to 500 parts by mass, and even more preferably 50 to 500 parts by mass, based on 100 parts by mass of carbon fibers, and further preferably, the content of the thermoplastic resin is 60 to 200 parts by mass based on 100 parts by mass of carbon fibers. When the ratio of the thermoplastic resin to 100 parts by mass of carbon fibers is less than 30 parts by mass, voids are easily produced in the carbon-fiber-reinforced composite material obtained, so that there is concern in that strength or rigidity may be lowered. On the contrary, when the ratio of the thermoplastic resin is larger than 1,000 parts by mass, it may be difficult for the effect of supplementing carbon fibers to be exhibited.

<Prepreg>

In the present invention, when a cold press-molding is performed, the random mat is heated to a temperature that is a softening temperature or higher of the thermoplastic resin contained in the random mat and less than the thermal decomposition temperature thereof, that is, the random mat is heated to a temperature that is the melting temperature or higher and less than the thermal decomposition temperature in the case where the thermoplastic resin is crystalline, and to a temperature that is the glass transition temperature or higher and less than the thermal decomposition temperature in the case where the resin is amorphous, so that the carbon fibers is impregnated with the thermoplastic resin to obtain a prepreg, and it is used in molding. The form of carbon fibers in the prepreg maintains a state in the random mat. That is, carbon fibers in the prepreg maintain the fiber length or isotropy and opening degrees in the random mat, and are the same as the description on the aforementioned random mat.

That is, the present invention also includes the aforementioned method for manufacturing a shock resistant member, in which the shock resistant member is obtained by: providing a prepreg obtained by heating a random mat constituted by carbon fibers having a fiber length from 3 mm to 100 mm and a thermoplastic resin, in which the carbon fibers have a fiber areal weight from 25 g/m$^2$ to 3,000 g/m$^2$, the ratio of carbon fiber bundles (A) constituted by the carbon fibers of the critical single fiber number or more, defined by the aforementioned Equation (1), to the total amount of the carbon fibers in the random mat is 20 vol% or more and less than 99 vol%, and the average number (N) of fibers in the carbon fiber bundles (A) satisfies the aforementioned Equation (2), to a temperature that is the softening temperature or higher and less than the thermal decomposition temperature of the thermoplastic resin; and press-molding the prepreg.

In addition, in the present application, as the thermal decomposition temperature of the thermoplastic resin, the thermal decomposition temperature in air may be exemplified.

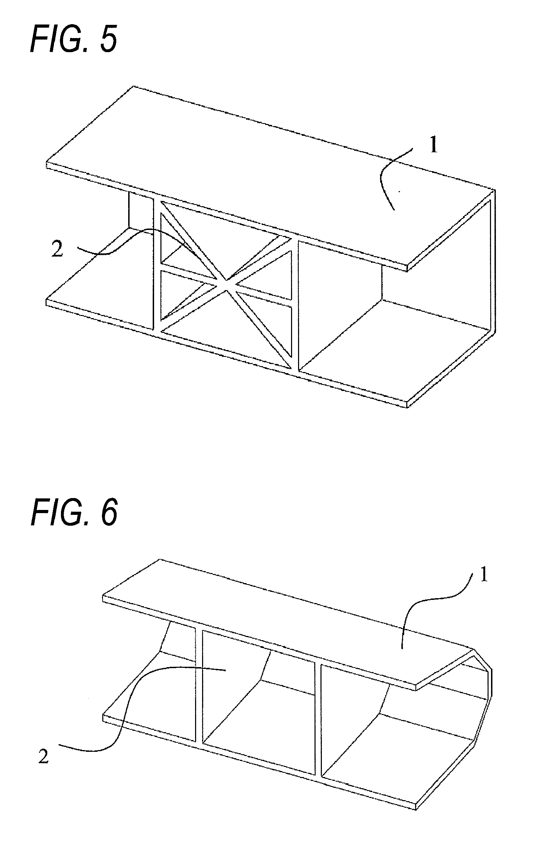

The shock resistant member of the present invention is not limited to the aspect illustrated in FIG. 1, and may be, for example, an aspect illustrated in FIGS. 2 to 10.

Examples

The present invention will be described in more detail with reference to Examples, but the present invention is not limited to the Examples at all. Furthermore, for the thermoplastic resin used, the melting temperature and the thermal decomposition temperature (in air) of Nylon 6 are 225°C and 300°C, respectively, and the melting temperature and the thermal decomposition temperature (in air) of polybutylene terephthalate are 230°C and 300°C, respectively.

1) Analysis of Carbon Fiber Bundles in Random Mat

A random mat with a size of about 100 mm × 100 mm is cut. Fiber bundles are all extracted by tweezers from the cut random mat, and the bundle number (I) of the carbon fiber bundles (A) and the length (Li) and mass (Wi) of the carbon fiber bundles (A) are measured, and recorded. For fiber bundles that are small to such an extent that the bundles may not be extracted by tweezers, the mass (Wk) thereof is finally measured as a whole. In the measurement of mass, a balance measurable up to 1/100 mg (0.01 mg) is used.

From the fiber diameter (D) of the carbon fibers used in the random mat, the critical single fiber number is calculated, and the carbon fibers are classified into carbon fiber bundles (A) with the critical single fiber number or more, and the others. Furthermore, when two or more kinds of carbon fibers are used, the fibers are classified into each kind, and then measurement and evaluation are performed for each kind. A method of obtaining an average number (N) of fibers in the carbon fiber bundles (A) is as follows.

The number (Ni) of fibers in the individual carbon fiber bundle is obtained from a tex (F) of used carbon fibers by the following equation.

$$Ni = Wi/(Li \times F)$$

The average number (N) of fibers in the carbon fiber bundles (A) is determined from the bundle number (I) of the carbon fiber bundles (A) by the following equation.

$$N = \Sigma \, Ni/I$$

The ratio (VR) of the carbon fiber bundles (A) to the total amount of fibers of the random mat is obtained by the following equation using the density (ρ) of the carbon fibers.

$$VR = \Sigma(Wi/\rho) \times 100/((Wk + \Sigma Wi)/\rho)$$

2) Analysis of Average Fiber Length of Carbon Fibers Included in Shock Resistant Member

For the average fiber length of carbon fibers included in the shock resistant member obtained, the shock resistant member was heated in a furnace at 500°C for about 1 hour to remove a resin, and then lengths of 100 carbon fibers arbitrarily extracted were measured by a pair of vernier calipers and a loupe up to a unit of 1 mm and recorded, and the average fiber length (La) was obtained from lengths (Li, herein, i = an integer from 1 to 100) of all the carbon fibers measured by the following equation.

$$La = \Sigma \, Li/100$$

Further, the average fiber length of the carbon fibers in the random mat may also be measured by the aforementioned method.

3) Analysis of Carbon Fiber Bundles in Shock Resistant Member

For the shock resistant member, measurement is conducted by heating the shock resistant member in a furnace at 500°C for about 1 hour to remove a resin, and then using the method in the aforementioned random mat.

4) Analysis of Fibers and Resin Present in Shock Resistant Member

The mass of the carbon fibers and the resin was calculated by cutting the test specimens from the open cross-section part and the rib part of the shock resistant member, heating the test specimens in a furnace at 500°C for about 1 hour to remove a resin, and measuring the specimen mass before and after the treatment.

5) Tensile Modulus Test

Test specimens were cut from a shock resistant member using a water jet, a Tensilon universal tester manufactured by A&D Company, Limited was used to measure tensile moduli in any direction in a bottom surface of the open cross-section part and in a direction perpendicular to the direction in the same plane, and a ratio obtained by dividing a larger value by a smaller value is calculated.

6) Method of Evaluating Shock Resistance

When the shock resistant member was compressed at high speed, the withstanding load was measured using a weight-drop tester. In order to make an evaluation in which performance on the input other than one direction was also added, evaluation was made by a value obtained by dividing the product of the withstanding loads in the longitudinal direction, the width direction, and the height direction by the member mass.

[Reference Example 1]

Carbon fibers (TENAX (registered trademark) STS40-24 KS (fiber diameter 7 $\mu$m), manufactured by TOHO TENAX Co., Ltd.) as reinforcing fibers were cut into a fiber length of 10 mm while being widened to a width of 20 mm, and were introduced into a tapered tube at a feed rate of carbon fibers of 820 g/min, and while air was blown to the carbon fibers in the tapered tube to partially open the fiber bundles, the carbon fibers were sprayed on a table provided at a lower portion of a tapered tube outlet.

Furthermore, as a matrix resin, a Nylon 6 (Polyamide 6: hereinafter sometime described as PA6) resin (1015 B manufactured by Ube Industries, Ltd.) having an average particle diameter of about 1 mm and frozen pulverized was supplied to a tapered tube at 1000 g/ min, and was sprayed simultaneously with the carbon fibers to obtain a random mat in which carbon fibers having an average fiber length of 10 mm and PA6 were mixed. The reinforcing fiber (carbon fiber) volume fraction (Vf) of the random mat was 35% and the fiber areal weight of the reinforcing fiber was 910 g/m$^2$. As a result of investigating the average fiber length (La), the ratio of the reinforcing fiber bundles (A), and the average number (N) of fibers of the random mat obtained, the average fiber length (La) was 10 mm, the critical single fiber number defined by Equation (1) was 86, the ratio of the reinforcing fiber bundles (A) to the total amount of fibers in the mat was 33%, and the average number (N) of fibers in the reinforcing fiber bundles (A) was 230. As a result of observing the form of the reinforcing fibers in the random mat, fiber axes of the reinforcing fibers were almost parallel to the plane, and the reinforcing fibers were randomly dispersed in the plane.

[Reference Example 2]

Carbon fibers (TENAX (registered trademark) STS40-24 KS (fiber diameter 7 $\mu$m), manufactured by TOHO TENAX Co., Ltd.) as reinforcing fibers were cut into a fiber length of 4 mm, and were introduced into a tapered tube at a feed rate of carbon fibers of 240 g/min, and while air was blown to the carbon fibers in the tapered tube to open the fiber bundles until the fiber bundles became almost completely single fibers, the carbon fibers were sprayed on a table provided at a lower portion of a tapered tube outlet.

Further, as a matrix resin, a Nylon 6 resin (1015 B manufactured by Ube Industries, Ltd.) having an average particle diameter of about 1 mm and frozen pulverized was supplied to a tapered tube at 1,400 g/ min, and was sprayed simultaneously with the carbon fibers to obtain a random mat in which carbon fibers having an average fiber length of 4 mm and PA6 were mixed. The reinforcing fiber (carbon fiber) volume fraction (Vf) of the random mat was 10% and the fiber areal weight of the reinforcing fibers was 260 g/m$^2$. As a result of investigating the average fiber length (La), the ratio of the reinforcing fiber bundles (A), and the average number (N) of fibers of the random mat obtained, the average fiber length was 4 mm, the critical single fiber number defined by Equation (1) was 86, and the reinforcing fiber bundles (A) was not observed. As a result of observing the form of the reinforcing fibers in the random mat obtained, fiber axes of the reinforcing fibers were almost parallel to the plane, and the reinforcing fibers were randomly dispersed in the plane.

[Reference Example 3]

Carbon fibers (TENAX (registered trademark) HTS40-12 KS (fiber diameter 7 $\mu$m, fiber width 10 mm), manufactured by TOHO TENAX Co., Ltd.) as reinforcing fibers were cut into a fiber length of 30 mm, and were introduced into a tapered tube at a feed rate of carbon fibers of 950 g/min, and while air was blown to the carbon fibers in the tapered tube to partially open the fiber bundles, the carbon fibers were sprayed on a table provided at a lower portion of a tapered tube outlet.

In addition, as a matrix resin, a polybutylene terephthalate resin (hereinafter sometimes described as PBT, DURANEX (registered trademark) 2002 manufactured by Polyplastic Co., Ltd.) having an average particle diameter of about 1 mm and frozen pulverized was supplied to a tapered tube at 1,060 g/ min, and was sprayed simultaneously with the carbon fibers to obtain a random mat in which carbon fibers having an average fiber length of 30 mm and PBT were mixed. The reinforcing fiber (carbon fiber) volume fraction (Vf) of the random mat was 40% and the fiber areal weight of the reinforcing fibers was 1,050 g/m$^2$. As a result of investigating the average fiber length (La), the ratio of the reinforcing fiber bundles (A), and the average number (N) of fibers, the average fiber length (La) of the random mat obtained was 30 mm, the critical single fiber number defined by Equation (1) was 86, the ratio of the reinforcing fiber bundles (A) to the total amount of fibers in the mat was 85%, and the average number (N) of fibers in the reinforcing fiber bundles (A) was 1,500. As a result of observing the form of the reinforcing fibers in the random mat, fiber axes of the reinforcing fibers were almost parallel to the plane, and the reinforcing fibers were randomly dispersed in the plane.

[Example 1]

The random mat obtained in Reference Example 3 was hot-pressed at 260°C and 4 MPa for 5 minutes using a press machine manufactured by Kawasaki Hydromechanics Corp., in which a flat plate mold for impregnation was set, and then cooled to 50°C to obtain a prepreg having a fiber areal weight of 1,050 g/m$^2$ in reinforced fibers in which PBT was present in an amount of 112 parts by mass based on 100 parts by mass of the carbon fibers.

Next, the prepreg obtained was heated to 260°C using an IR oven manufactured by NGK Kilntech Corporation and cold-pressed at a pressure of 10 MPa for 60 seconds to obtain a shaped product (shock resistant member) as illustrated in FIG. 2.

The shape of the present Example was consititued by an open cross-section part having a width of 40 mm, a length of 50 mm, a height of 22 mm, and a thickness of 2 mm, and a rib part having a thickness of 2 mm. The average fiber length of carbon fibers in the shock resistant member was 30 mm, the ratio of carbon fiber bundles (A) was 85%, and the average number (N) of fibers in the carbon fiber bundles (A) was 1,500. Each of the amounts of the thermoplastic resin present in the open cross-section part and the panel part was 112 parts by mass and the amount of the thermoplastic resin present in the rib part was 112 parts by mass, based on 100 parts by mass of the carbon fibers, and the ratio of the tensile moduli in any direction in the bottom surface of the open cross-section part and in a direction orthogonal to the direction in the same plane was 1.02.

The shock resistant performance in the configuration was 1.6 $\times$ 10$^{12}$ N$^3$/g, and it turned out that the shock resistant member is excellent in shock resistance to the load inputted from each of the longitudinal direction, the width direction, and the height direction.

[Example 2]

The random mat obtained in Reference Example 1 was hot-pressed at 260°C and 4 MPa for 5 minutes using a press machine manufactured by Kawasaki Hydromechanics Corp., in which a flat plate mold for impregnation was set, and then cooled to 50°C to obtain a prepreg having a fiber areal weight of 910 g/m$^2$ in reinforced fibers in which PA6 was present in an amount of 122 parts by mass based on 100 parts by mass of the carbon fibers.

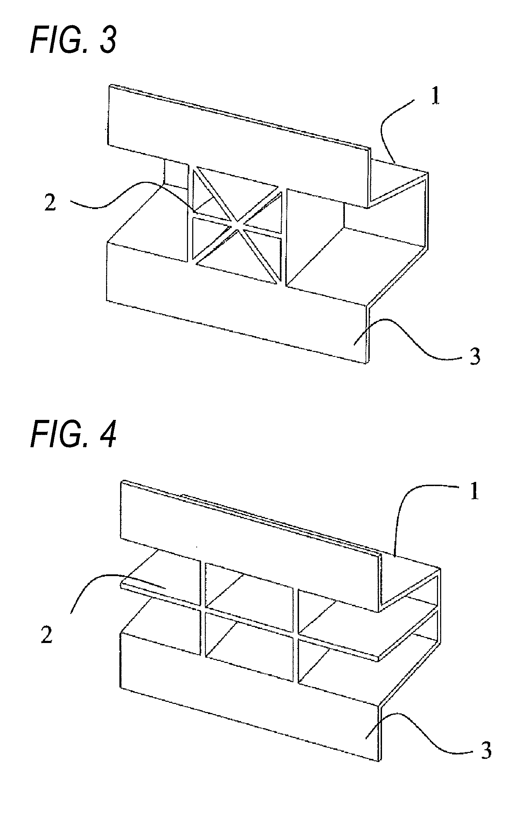

Next, the prepreg obtained was heated to 260°C using an IR oven manufactured by NGK Kilntech Corporation and cold-pressed at a pressure of 10 MPa for 60 seconds to obtain a shaped product (shock resistant member) as illustrated in FIG. 4.

The shape of the present Example was consititued by an open cross-section part having a width of 40 mm, a length of 50 mm, a height of 22 mm, and a thickness of 2 mm, and a rib part having a thickness of 2 mm. The average fiber length of carbon fibers in the shock resistant member was 10 mm, the ratio of carbon fiber bundles (A) was 33%, and the average number (N) of fibers in the carbon fiber bundles (A) was 230. Each of the amounts of the thermoplastic resin present in the open cross-section part and the panel part was 122 parts by mass and the amount of the thermoplastic resin present in the rib part was 122 parts by mass, based on 100 parts by mass of the carbon fibers, and the ratio of the tensile moduli in any direction within the bottom surface of the open cross-section part and in a direction orthogonal to the direction within the same plane was 1.05. The shock resistant performance in the configuration was $1.6 \times 10^{12}$ N$^3$/g, and it turned out that the shock resistant member is excellent in shock resistance to the load inputted from each of the longitudinal direction, the width direction, and the height direction.

[Comparative Example 1]

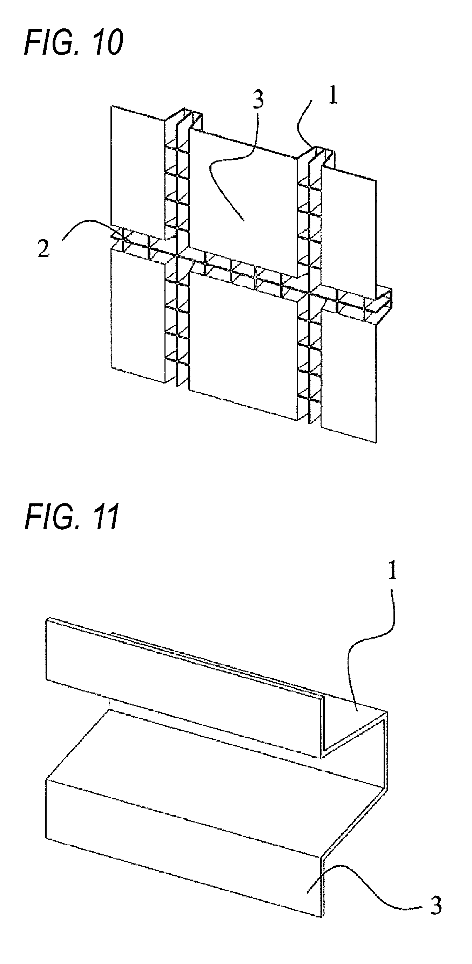

A prepreg was obtained in the same manner as in Example 2 from the random mat obtained in Reference Example 1, and the prepreg obtained was heated to 260°C using an IR oven manufactured by NGK Kilntech Corporation and cold-pressed at a pressure of 30 MPa for 60 seconds to obtain a shock resistant member as illustrated in FIG. 11. The shape of the present Example was constituted by an open cross-section part having a width of 40 mm, a length of 50 mm, a height of 22 mm, and a thickness of 2 mm. The average fiber length of carbon fibers in the shock resistant member was 10 mm, the ratio of carbon fiber bundles (A) was 33%, and the average number (N) of fibers in the carbon fiber bundles (A) was 230. Each of the amounts of the thermoplastic resin present in the open cross-section part and the panel part was 122 parts by mass based on 100 parts by mass of the carbon fibers, and the ratio of the tensile moduli in any direction within the bottom surface of the open cross-section part and in a direction orthogonal to the direction within the same plane was 1.05. The shock resistant performance in the configuration was $1.1 \times 10^{11}$ N$^3$/g. Compared to the present Example, a result, in which the structural rigidity is weak and the shock resistant performance is low, was obtained.

[Example 3]

The random mat obtained in Reference Example 2 was hot-pressed at 260°C and 4 MPa for 5 minutes using a press machine manufactured by Kawasaki Hydromechanics Corp., in which a flat plate mold for impregnation was set, and then cooled to 50°C to obtain a prepreg having a fiber areal weight of 260 g/m$^2$ in reinforced fibers in which PA6 was present in an amount of 583 parts by mass based on 100 parts by mass of the carbon fibers.

Next, the prepreg obtained was heated to 260°C using an IR oven manufactured by NGK Kilntech Corporation and cold-pressed at a pressure of 10 MPa for 60 seconds to obtain a shape which is the same as that in Example 2. The average fiber length of carbon fibers in shock resistant member was 4 mm, and the carbon fiber bundles (A) were not observed. Each of the amounts of the thermoplastic resin present in the open cross-section part and the panel part was 583 parts by mass and the amount of the thermoplastic resin present in the rib part was 583 parts by mass, based on 100 parts by mass of the carbon fibers, and the ratio of the tensile moduli in any direction within the bottom surface of the open cross-section part and in a direction orthogonal to the direction within the same plane was 1.06. The shock resistant performance in the configuration was $3.2 \times 10^{11}$ N$^3$/g.

Industrial Applicability

According to the present invention, it is possible to provide a shock resistant member which is lightweight and has a high degree of freedom in shape and excellent shock resistance.

In addition, provided is a manufacturing method, by which a shock resistant member, which is lightweight and has a high degree of freedom in shape and excellent shock resistance may be manufactured, with high efficiency.

Although the present invention has been described in detail with reference to specific embodiments, it is obvious to those skilled in the art that various changes or modifications may be made without departing from the spirit and scope of the present invention.

The present application is based on Japanese Patent Application (Patent Application No. 2011-268176) filed on December 7, 2011 and Japanese Patent Application (Patent Application No. 2011-259046) filed on November 28, 2011, the contents of which are incorporated herein by reference.

Explanation of Reference Numerals and Symbols

1   Open cross-section part
2   Rib part
3   Panel part
4   Inner side of open cross-section part

**Claims**

1. A shock resistant member comprising:

   an open cross-section part; and
   a rib part present in an inside of the open cross-section part,
   wherein at least one of the open cross-section part and the rib part includes a carbon-fiber-reinforced composite material including a thermoplastic resin, and the other may include a thermoplastic resin, and
   wherein an amount of the thermoplastic resin present therein is 30 to 1,000 parts by mass based on 100 parts by mass of carbon fibers, and an average fiber length of the carbon fibers is 3 to 100 mm.

2. The shock resistant member according to claim 1, wherein both the open cross-section part and the rib part include a carbon-fiber-reinforced composite material.

3. The shock resistant member according to claim 1 or 2, wherein a ratio of the amount of the thermoplastic resin present, which is obtained by the following Equation (i) based on an amount of the thermoplastic resin present in the open cross-section part (parts by mass per 100 parts by mass of carbon fibers) and an amount of the thermoplastic resin present in the rib part (parts by mass per 100 parts by mass of carbon fibers), is -60% to +45%:

$$\text{Ratio (\%) of the amount of the thermoplastic resin present} = 100 \times ((\text{the amount of the thermoplastic resin present in the rib part}) - (\text{the amount of the thermoplastic resin present in the open cross-section part})) / (\text{the amount of the thermoplastic resin present in the open cross-section part}) \quad (i).$$

4. The shock resistant member according to any one of claims 1 to 3, wherein a ratio obtained by dividing a larger value by a smaller value of tensile moduli in any in-plane direction of the bottom surface of the open cross-section part and in a direction orthogonal to the direction in the same plane in the shock resistant member is 1.0 to 1.3.

5. The shock resistant member according to any one of claims 1 to 4, wherein from the amount of a thermoplastic resin present in the open cross-section part (parts by mass per 100 parts by mass of carbon fibers) and the amount of a thermoplastic resin present in the rib part (parts by mass per 100 parts by mass of carbon fibers), a ratio of the thermoplastic resin present, which is obtained by the following Equation (i)

the ratio (%) of the amount of the thermoplastic resin present $= 100 \times ($(the amount of the thermoplastic resin present in the rib part) $-$ (the amount of the thermoplastic resin present in the open cross-section part))/(the amount of the thermoplastic resin present in the open cross-section part) \hfill (i)

is -60% to +45%, and for the tensile moduli in any direction within the bottom surface of the open cross-section part and in a direction orthogonal to the direction within the same plane, a ratio obtained by dividing a larger value by a smaller value is 1.0 to 1.3.

6. The shock resistant member according to any one of claims 1 to 5, wherein the amount of the thermoplastic resin present are the same in the open cross-section part and the rib part, and
a ratio obtained by dividing a larger value by a smaller value of tensile moduli in any in-plane direction of a bottom surface in the open cross-section part and in a direction orthogonal to the direction in the same plane is 1.0 to 1.3.

7. The shock resistant member according to claim 1 or 2, wherein a ratio of carbon fiber bundles (A) constituted by the carbon fibers, included in the carbon-fiber-reinforced composite material, of a critical single fiber number or more, defined by the following Equation (1), to a total amount of the carbon fibers in the carbon-fiber-reinforced composite material is 20 vol% or more and less than 99 vol%, and the average number (N) of fibers in the carbon fiber bundles (A) satisfies the following Equation (2):

$$\text{Critical single fiber number} = 600/D \qquad (1)$$

$$0.7 \times 10^{4}/D^{2} < N < 1 \times 10^{5}/D^{2} \qquad (2)$$

wherein D is an average fiber diameter ($\mu$m) of single carbon fibers.

8. The shock resistant member according to any one of claims 1 to 7, wherein the shock resistant member has a structure in which the rib part connects facing surfaces in the open cross-section part.

9. The shock resistant member according to any one of claims 1 to 8, comprising two or more rib parts.

10. The shock resistant member according to any one of claims 1 to 9, wherein a height of the rib part is 5% to 100% of a height of an opening from a bottom surface of the open cross-section part.

11. The shock resistant member according to any one of claims 1 to 10, wherein the rib part is a rib part which is vertical to a plate body of the open cross-section part.

12. The shock resistant member according to any one of claims 1 to 11, wherein the rib part is a rib part which is symmetrical to a surface orthogonal to the open cross-section part.

13. The shock resistant member according to any one of claims 1 to 12, wherein a rib is formed such that a ratio of a total area of the rib part is 1% or more based on a total area of a plate body of the open cross-section part.

14. The shock resistant member according to any one of claims 1 to 13, wherein a shock resistant performance is $4 \times 10^{11}$ ($N^{3}/g$) or more.

15. The shock resistant member according to any one of claims 1 to 14, further comprising a panel part which is continuous to an end of the open cross-section part, wherein the open cross-section part, the rib part, and the panel part are integrally molded.

16. The shock resistant member according to any one of claims 1 to 15, wherein the amount of the thermoplastic resin present in the shock resistant member is 30 to 500 parts by mass based on 100 parts by mass of the carbon fibers.

17. A method for manufacturing the shock resistant member according to any one of claims 1 to 16, which is obtained by press-molding a random mat constituted by carbon fibers having a fiber length from 3 mm to 100 mm and a thermoplastic resin, wherein the carbon fibers have a fiber areal weight from 25 g/m$^2$ to 3,000 g/m$^2$, a ratio of carbon fiber bundles (A) constituted by the carbon fibers of a critical single fiber number or more, defined by the aforementioned Equation (1), to the total amount of the carbon fibers in the random mat is 20 vol% or more and less than 99 vol%, and an average number (N) of fibers in the carbon fiber bundles (A) satisfies the aforementioned Equation (2).

18. A method for manufacturing the shock resistant member according to any one of claims 1 to 16, which is obtained by providing a prepreg obtained by heating a random mat constituted by carbon fibers having a fiber length from 3 mm to 100 mm and a thermoplastic resin, wherein the carbon fibers have a fiber areal weight from 25 g/m$^2$ to 3,000 g/m$^2$, the ratio of carbon fiber bundles (A) constituted by the carbon fibers of a critical single fiber number or more, defined by the aforementioned Equation (1), to the total amount of the carbon fibers in the random mat is 20 vol% or more and less than 99 vol%, and an average number (N) of fibers in the carbon fiber bundles (A) satisfies the aforementioned Equation (2), to a temperature that is the softening temperature or more and less than the thermal decomposition temperature of the thermoplastic resin, and
press-molding the prepreg.

## FIG. 1

## FIG. 2

*FIG. 3*

*FIG. 4*

FIG. 5

FIG. 6

*FIG. 7*

*FIG. 8*

*FIG. 9*

FIG. 10

FIG. 11

## INTERNATIONAL SEARCH REPORT

| International application No. |
|---|
| PCT/JP2012/080633 |

### A. CLASSIFICATION OF SUBJECT MATTER
*F16F7/12*(2006.01)i, *C08J5/04*(2006.01)i, *F16F7/00*(2006.01)i

According to International Patent Classification (IPC) or to both national classification and IPC

### B. FIELDS SEARCHED

Minimum documentation searched (classification system followed by classification symbols)
F16F7/12, C08J5/04, F16F7/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2009-526705 A (Sabic Innovative Plastics I.P. B.V.), 23 July 2009 (23.07.2009), entire text; all drawings & US 2007/0200376 A1 & US 2007/0278803 A1 & EP 1986890 A & WO 2007/097878 A1 & DE 602007011399 D & CN 101384452 A & AT 492434 T & AU 2007218093 A & KR 10-2008-0093104 A | 1-18 |
| Y | WO 2009/069649 A1 (Mitsui Chemicals, Inc.), 04 June 2009 (04.06.2009), claims; paragraphs [0129], [0130]; table 1 & US 2010/0311892 A1 & EP 2221339 A1 & CN 101878266 A & KR 10-2010-0089888 A | 1-18 |

| ☒ Further documents are listed in the continuation of Box C. | ☐ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 January, 2013 (21.01.13) | 29 January, 2013 (29.01.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2012/080633

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2011-207930 A (Toray Industries, Inc.), 20 October 2011 (20.10.2011), entire text; all drawings; all tables (Family: none) | 17-18 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008068720 A

- JP H6305378 B